# EUROPEAN PATENT SPECIFICATION

(11) **EP 3 727 821 B1**
(45) Date of publication and mention of the grant of the patent: **02.02.2022**
(21) Application number: 18833329.8
(22) Date of filing: 18.12.2018
(51) Int. Cl.: B29D 30/06

(54) **PROCESS FOR PRODUCING SELF-SEALING TYRES**
VERFAHREN ZUR HERSTELLUNG SELBSTDICHTENDER REIFEN
PROCÉDÉ DE PRODUCTION DE PNEUMATIQUES AUTO-OBTURANTS

(30) Priority: 21.12.2017 IT 201700148264
(43) Date of publication of application: 28.10.2020
(73) Proprietor: Pirelli Tyre S.p.A., 20126 Milano (IT)
(72) Inventor: DE COL, Christian, 20126 Milano (IT); CONTI, Davide Lupo, Rome, Georgia 30161-700 (US); AMURRI, Cesare Emanuele, 20126 Milano (IT); VANIGLIA, Erika, 20131 Milano (IT)
(74) Representative: Vittorangeli, Lucia
(86) International application number: PCT/IB2018/060220
(87) International publication number: WO 2019/123225

(56) References cited:
- JP-A- 2001 018 609
- US-A1- 2003 150 544

## Description

The object of the present invention is a process for producing self-sealing tyres.

Self-sealing tyres are puncture-resistant tyres because they contain a self-sealing layer applied to the radially inner surface of the tyre which automatically seals a possible puncture.

The production cycles of a tyre provide for making and/or assembling the various components of a tyre, obtaining a green tyre and subsequently subjecting the green tyre to a process of moulding and vulcanisation adapted to define the structure of the tyre according to a desired tread design and geometry.

With "self-sealing sleeve" it is intended an assembled semi-finished product having a cylindrical configuration intended to make a self-sealing assembly inside a tyre.

With "cylindrical configuration" both of the self-sealing sleeve and of the support, in particular of the drum, which carries it, it is intended both a cylindrical configuration having rectilinear generatrix and a slightly convex configuration having convex generatrix.

With the generic term "tyre", when not further specified, it is indicated both a green tyre being processed comprising at least one carcass structure having at least one toroidally shaped carcass ply with its axially opposite end flaps associated with respective bead cores and forming a pair of beads, and a green tyre, and a moulded and vulcanised tyre.

With "green tyre" it is indicated a tyre at the end of the building process not yet subjected to a process of moulding and vulcanisation.

With "vulcanised tyre" or "moulded and vulcanised tyre" it is indicated a green tyre that has been subjected to a process of moulding and vulcanisation.

In the case of the tyre (or a portion thereof), the terms "radial" and "axial" and the expressions "radially inner/outer" and "axially inner/outer" are used with reference to the radial/axial direction of the tyre itself (or a portion thereof) i.e. to a direction perpendicular/parallel to the rotation axis of the tyre.

In the case of the self-sealing sleeve, of a support thereof or of a rolling device, the terms "radial" and "axial" and the expressions "radially inner/outer" and "axially inner/outer" are used with reference to the radial/axial direction of the self-sealing sleeve, of a support thereof, in particular of a drum, or of a rolling device, i.e. to a direction perpendicular/parallel to the axis of the self-sealing sleeve, of the support/drum or of the rolling device. In the case of the tyre, the terms "circumferential" and "circumferentially" are used with reference to the annular extension of the tyre (or of a portion thereof) around the axis of rotation thereof. In the case of the self-sealing sleeve, of its support or of the rolling device, the terms "circumferential" and "circumferentially" are used with reference to the annular extension of the self-sealing sleeve or of its support, in particular of the drum, or of the rolling device around the axis thereof. With "coaxial position" of the self-sealing sleeve with respect to the tyre it is intended a relative position in which the axis of rotation of the tyre substantially coincides with the axis of the self-sealing sleeve. Therefore, when the self-sealing sleeve is arranged coaxial with the tyre and subsequently coupled thereto to form a self-sealing assembly, the axis of the self-sealing sleeve and possibly of the support/drum substantially coincides with the axis of rotation of the tyre and the aforementioned terms may indifferently refer to one or the other axis.

With "axial size" of the self-sealing sleeve it is intended a size parallel to the axis thereof delimited by circumferential end edges of the self-sealing sleeve itself.

With "crown portion" of the tyre it is intended a portion of the tyre arranged substantially perpendicular to an axial centreline plane thereof, in a radially outer position and corresponding at least to portions of the carcass structure.

With "annular anchoring portions" of the tyre, commonly also defined as "beads", the radially inner zones of the tyre are intended, arranged on opposite sides of said axial centreline plane, respectively, configured so as to engage with a mounting rim. In particular, with "annular anchoring portion" it is intended at least one component of the tyre which comprises at least one bead core and preferably also a filler insert in a radially outer position thereto.

With "lateral portions" of the tyre, portions of the tyre are intended which extend respectively from axially opposite sides of said axial centreline plane between each of the annular anchoring portions and the crown portion, corresponding at least to portions of the carcass structure arranged, at end of the building, in an axially inner position to the sidewalls of a green tyre or a moulded and vulcanised tyre.

With "aspect ratio" it is intended a ratio expressed as a percentage between the height of the sidewall of the tyre in radial section and the width in radial section from sidewall to sidewall of the tyre itself.

With "circumferential perimeter" of the self-sealing sleeve it is intended a circumferential dimension of a cross-section of the self-sealing sleeve itself, for example a radially inner circumference or a radially outer circumference or an intermediate circumference.

With "first/second annular portion" of the self-sealing sleeve product it is intended a substantially annular portion having an axial size smaller than the axial size of the self-sealing sleeve. Each annular portion may be a continuous ring or a circumferential sequence of sectors defined, for example, by circumferential sectors of a drum supporting the self-sealing sleeve.

With "self-sealing material" it is intended a polymeric material provided, after the vulcanisation of the tyre, with viscoelastic and tackiness features such as to allow the material to flow inside a perforation caused by a sharp element and to adhere and be dragged by said moving sharp element. Such polymeric material may for example comprise a synthetic or natural elastomer, an elastomeric block copolymer, process oil, at least one tackifying agent, and at least one reinforcing filler.

The document US2009/0205765 describes a method for making a self-sealing tyre wherein it is provided to arrange a vulcanised tyre and form a sealing band by extruding a self-sealing material on a lamina. The sealing band is wound in a spiral to be introduced into the vulcanised tyre.

The document EP3009260 describes a self-sealing tyre comprising a sealing layer obtained by spiralling a sealing material directly onto the radially inner surface of the vulcanised tyre rotated about the axis thereof. In particular, the vulcanised tyre is mounted on a rotating actuation device while a nozzle mounted on the tip of an extruder is inserted within the tyre. The sealing material is extruded from the extruder and deposited on the surface of the tyre through the nozzle.

The document WO2011/064698 relates to a method for selectively controlling the self-sealing capacity of a tyre obtained by affixing a sealing compound on a drum and subsequently forming a precursor of a green tyre thereon including liner and carcass, and subsequent shaping, moulding and vulcanisation. Further examples of a process for producing self-sealing tyres are disclosed in US2003/0150544 and JP2001/018609.

The Applicant has verified that current production needs require a high level of flexibility in every step of the process and that even only limiting the application of the sealing layer to a step after the vulcanisation would limit the possibilities of adapting the building process and the layout of the building plant to the single production requirements.

The Applicant has perceived the importance of freeing, as much as possible, the step of application of the sealing layer from the specific tyre building process to increase flexibility.

The Applicant has understood that by making a self-sealing sleeve completely independent of the type of process and of the tyre building plant, it is possible to apply such a sleeve to the green tyre being processed, to the green tyre or to the vulcanised tyre, obtained by any building process.

However, the Applicant has noted that the types of tyres differ in various factors including width, inner profile, difference existing between the detectable fitting diameter at the beads and the detectable inner diameter in the proximity of the axial centreline plane.

The Applicant has therefore further perceived that, with a view to flexibility, the self-sealing sleeve should be able to be applied equally to any type of tyre, maintaining the integrity of the self-sealing sleeve and the quality of the finished tyre.

In particular, the Applicant has perceived that it is necessary to obtain both the correct adhesion against the inner surface of the tyre which, especially in the shoulder areas, does not offer ample room for manoeuvre and applicability even in the case of a significant difference existing between the minimum detectable diameter at the beads and the detectable inner diameter in the proximity of the crown region, especially during the processing of tyres having a relatively large cross-section, for example with an aspect ratio equal to or greater than 60.

Finally, the Applicant has found that the application of the self-sealing sleeve within a tyre, whether green being processed, green or already moulded and vulcanised, is facilitated by a two-step adhesion which provides for radially expanding the self-sealing sleeve until it partially adheres and subsequently executing a rolling action up to reaching a complete adhesion. More precisely, the invention relates to a process for producing self-sealing tyres.

Preferably, an action a) is provided for arranging a tyre comprising a crown portion arranged circumferentially around a rotation axis of the tyre and two lateral portions which respectively extend on axially opposite sides of the crown portion, wherein each lateral portion terminates in an annular anchoring portion having a diameter and wherein the crown portion has a radially inner crown surface.

Preferably, an action b) is provided for arranging a support having cylindrical configuration and exhibiting a radially outer deposition surface, arranged around an axis at a diameter smaller than the diameter of the annular anchoring portions of the tyre, said support being radially expandable.

Preferably, an action c) is provided for arranging on the deposition surface of the support a self-sealing sleeve having a cylindrical configuration around said axis.

Preferably, said self-sealing sleeve extends along said axis between two circumferential end edges delimiting an axial size of said self-sealing sleeve.

Preferably, an action d) is provided for introducing the support carrying the self-sealing sleeve within the tyre until it is arranged in a position coaxial with the crown portion and radially internal with respect thereto.

Preferably, an action e) is provided for radially expanding said support within the tyre up to reaching an intermediate configuration of the self-sealing sleeve in which the self-sealing sleeve partially adheres to the radially inner crown surface. Preferably, an action f) is provided for radially contracting said support to a diameter smaller than the diameter of the annular anchoring portions of the tyre and extracting said support from the tyre, releasing the self-sealing sleeve partially adhering to the radially inner crown surface.

Preferably, an action g) is provided for introducing a rolling device within the tyre.

Preferably, an action h) is provided for executing a rolling action on the self-sealing sleeve up to reaching a final configuration of the self-sealing sleeve in which it completely adheres to the radially inner crown surface.

The Applicant believes that by applying the self-sealing sleeve in two steps by expansion and rolling, it is possible to obtain a complete and air bubble-free adhesion, independently of the factors which can differentiate the tyres, including inner surface defects. The first application by expansion allows the self-sealing sleeve to be correctly positioned within the tyre, arranging it coaxial and centred with the tyre. The second application by rolling allows the self-sealing sleeve to be consolidated on the entire surface irrespective of the inner profile, the width and the aspect ratio of the tyre.

The present invention may exhibit at least one of the following preferred features.

Preferably, said support extends along said axis by an axial size smaller than the axial size of said self-sealing sleeve.

Preferably, action e) is executed at a first annular portion of the self-sealing sleeve in contact with the deposition surface. More preferably, said first annular portion has an axial size along said axis equal to the axial size of said support.

The Applicant believes that by applying the self-sealing sleeve at a limited annular portion it is possible to obtain an optimal positioning thereof with respect to the tyre.

Preferably, said rolling action comprises rolling at least one second annular portion of the self-sealing sleeve complementary to said first annular portion, according to an axial progression starting from the first annular portion and moving axially away therefrom up to reaching a circumferential end edge of said circumferential end edges of the self-sealing sleeve.

The Applicant believes that the rolling executed at least on the complementary portion of the self-sealing sleeve allows the self-sealing sleeve to be stabilized and consolidated while preventing the formation of air bubbles.

Preferably, said rolling action starts within the first annular portion and continues up to reaching a circumferential end edge of said circumferential end edges of the self-sealing sleeve.

The Applicant believes that the rolling may also consolidate the first annular portion already applied to the tyre by radial expansion.

Preferably the action c) is executed by positioning a circumferential end edge of said circumferential end edges of the self-sealing sleeve on the deposition surface.

Preferably, at the end of the action e) executed at the first annular portion, the self-sealing sleeve adheres to the radially inner crown surface at the first annular portion starting from said circumferential edge and falls towards said axis at an annular flap defining said second annular portion of the self-sealing sleeve and comprising the other circumferential end edge of said circumferential end edges of the self-sealing sleeve.

Preferably, said rolling action is executed according to an axial progression starting from the first annular portion up to reaching the other circumferential end edge of said circumferential end edges of the self-sealing sleeve, making said annular flap adhere.

Preferably, it is provided, immediately before the rolling, to accompany the annular flap towards the radially inner crown surface.

Preferably the action c) is executed by positioning said circumferential end edges of the self-sealing sleeve in axially outer positions to said deposition surface.

Preferably, at the end of the action e) executed at the first annular portion), the self-sealing sleeve adheres to the radially inner crown surface at the first annular portion arranged along the axis of the self-sealing sleeve in an intermediate position, between said circumferential end edges of the self-sealing sleeve, and falls towards said axis at two axially opposite annular flaps defining said second annular portion of the self-sealing sleeve and each comprising a circumferential end edge of said circumferential end edges of the self-sealing sleeve.

The Applicant believes that by operating symmetrically it is possible to obtain the correct positioning between the self-sealing sleeve and the tyre.

Preferably, said rolling action comprises a first rolling sub-action executed according to an axial progression starting from said first annular portion and moving axially away therefrom towards a circumferential end edge of said circumferential end edges of the self-sealing sleeve, making an annular flap adhere. Preferably, said rolling action comprises a second rolling sub-action executed according to an axial progression starting from said first annular portion and moving axially away therefrom towards the other circumferential end edge of said circumferential end edges of the self-sealing sleeve, making the other annular flap adhere.

Preferably, it is provided, immediately before each rolling sub-action, to accompany the respective annular flap towards the radially inner crown surface.

The Applicant believes that by accompanying the annular flaps immediately before rolling them it is possible to obtain a higher quality level of the final product.

Preferably, said first rolling sub-action and second rolling sub-action are executed simultaneously.

Alternatively, said first rolling sub-action and second rolling sub-action are executed consecutively.

Preferably, in action g) the rolling device is introduced in a contracted configuration.

Preferably, the action h) comprises radially expanding said rolling device up to reaching an expanded configuration and exerting a radial thrust action on the self-sealing sleeve in a centrifugal direction by means of at least one roller.

The Applicant believes that this solution allows applying a self-sealing sleeve to any type of tyre.

Preferably, the action h) comprises carrying out a relative rotational-translational motion between said at least one roller and said self-sealing sleeve.

Preferably the action h) comprises exerting said radial thrust action on the self-sealing sleeve by means of at least two rollers, circumferentially distributed with respect to the self-sealing sleeve.

Preferably, the action h) comprises exerting said radial thrust action on the self-sealing sleeve by means of at least three rollers, uniformly circumferentially distributed with respect to the self-sealing sleeve.

The Applicant believes that the presence of a plurality of rollers allows the rolling time of each tyre to be reduced. The indicated roller numbers offer the best compromise between the rolling time and the structural complexity, the latter affecting the overall dimensions in particular in contracted configuration.

Preferably, each thrust action is independent of the other.

Preferably, said thrust action is exerted pneumatically. Preferably, said radial thrust action is exerted elastically by at least one spring.

The Applicant believes that by operating independently and in particular by means of pneumatic/elastic actions allows a high level of quality of the finished product to be obtained even in the presence of small imperfections of the inner profile and with any inner tyre profile.

Preferably, radially expanding said rolling device and exerting said thrust action comprises rotating at least one arm pivoted to a central hub, said arm carrying said roller.

The Applicant believes that this solution allows the rolling action to be executed in a simple and effective manner.

Preferably, it is provided to contract the rolling device and extract it from the tyre at the end of the action h).

Preferably, the action b) comprises providing a drum as support, comprising a plurality of sectors distributed along a circumferential direction about the axis and radially expandable. Preferably in the action e) the support, even more preferably the drum, exerts on the self-sealing sleeve a centrifugal radial thrust action uniformly distributed along the entire circumferential extension of at least a first annular portion of the self-sealing sleeve itself.

The Applicant believes that by operating by means of a uniformly distributed thrust action it is possible to avoid the formation of air pockets in the first annular portion and obtain the correct and uniform radial expansion thereof.

Preferably, said plurality of sectors has laminar extensions extending along said circumferential direction and each slidably inserted with a terminal portion thereof through a guide seat carried by one of the circumferentially contiguous sectors in radially inner position with respect to the deposition surface. The Applicant believes that in this way, the continuity of the outer drum profile is obtained.

Preferably, the action e) comprises radially translating the sectors according to a centrifugal direction and slidably extracting the laminar extensions from the respective guide seats in order to maintain the deposition surface according to a substantially continuous extension.

Preferably, in the action e) the support, even more preferably the drum, exerts on the first annular portion of the self-sealing sleeve a first radial thrust action discreetly distributed along the circumferential extension of at least a first annular portion of the self-sealing sleeve itself.

The Applicant believes that it is also possible to operate by means of a circumferentially non-uniform radial thrust as the first application of the self-sealing sleeve to the tyre, providing further expansion and/or rolling steps so as to obtain the correct adhesion even using traditional drums.

Preferably, the action e) comprises a first radial expansion of the plurality of sectors of the drum at the first circumferential sectors of the first annular portion of the self-sealing sleeve.

Preferably, the action e) comprises radially contracting said sectors of the drum releasing the first annular portion of the self-sealing sleeve at least partially adhering to the radially inner crown surface at said first circumferential sectors.

Preferably, a pressing action can be exerted on the first annular portion to complete the adhesion thereof on the radially inner crown surface.

Preferably, the action e) comprises in sequence:
a relative rotation between the contracted drum and the first annular portion of the self-sealing sleeve partially adhering to the radially inner crown surface to change the angular position of the drum sectors with respect to the first annular portion and
bring them at second circumferential sectors of the first annular portion alternating circumferentially to the first circumferential sectors,
a subsequent radial expansion of said drum sectors at the second circumferential sectors of the first annular portion. Preferably, it is provided to repeat one or more times the relative rotation between the contracted drum and the first annular portion of the self-sealing sleeve partially adhering to the radially inner crown surface, the subsequent radial expansion of said sectors and the subsequent radial contraction of said sectors as a function of the circumferential size of the drum sectors.

Preferably, the action c) comprises circumferentially depositing, on the support, a pre-assembled semi-finished product of the self-sealing sleeve having length suitable for making said self-sealing sleeve and width equal to the axial size of said self-sealing sleeve.

Preferably, the action c) comprises superimposing or fitting together opposite terminal flaps of the pre-assembled semi-finished product and generating a joint that extends between the circumferential end edges of the self-sealing sleeve.

Preferably, said opposite terminal flaps of the pre-assembled semi-finished product are mutually joined at the joint by means of an adhesive tape.

Preferably, an action of rolling or pressing of the joint is provided.

Preferably, the action b) comprises positioning two abutment elements in positions axially adjacent to the support so as to axially extend the deposition surface towards the exterior of the support, at least at the circumferential zone of the support in which said joint will be carried out.

Preferably, it is provided to remove a radially outer protective layer of the pre-assembled semi-finished product before the action e).

Preferably, the action c) comprises circumferentially depositing on the support single components of the self-sealing sleeve.

Preferably, the action a) comprises providing a green tyre comprising at least one carcass structure having at least one toroidally shaped carcass ply having the axially opposite end flaps thereof associated with respective bead cores.

Preferably, it is provided to end the building of the green tyre comprising the self-sealing sleeve adhering to the radially inner crown surface.

Preferably, it is provided to vulcanise and mould said green tyre comprising the self-sealing sleeve adhering to the radially inner crown surface.

Preferably, the action a) comprises providing a moulded and vulcanised tyre.

Preferably, it is provided to subject said moulded and vulcanised tyre comprising the self-sealing sleeve adhering to the radially inner crown surface to a further heat treatment adapted to consolidate the adhesion between the self-sealing sleeve and the radially inner crown surface of the moulded and vulcanised tyre.

Preferably, in the action c) the self-sealing sleeve has a first circumferential perimeter and, at the end of the action h), the self-sealing sleeve which has reached the final configuration has a second circumferential perimeter greater than the first circumferential perimeter.

Further features and advantages will become apparent from the following description of a process for producing self-sealing tyres, provided as a non-limiting example with reference to the accompanying figures, in which:
- figure 1 is a schematic view in radial half-section of a self-sealing tyre;
- figure 2 is a schematic representation of the flow diagram of a process for producing self-sealing tyres according to a first embodiment;
- figure 3 is a schematic representation of the flow diagram of a process for producing self-sealing tyres according to a second embodiment;
- figure 4 is a schematic view in radial half-section of a self-sealing sleeve associated with a relative support;
- figures 5a-5f are schematic views of an assembly consisting of a tyre and a self-sealing sleeve according to a sequence of actions of a process for producing self-sealing tyres;
- figure 6a is a partial schematic view of the assembly in figure 5b, in section according to an axial centreline plane of the tyre;
- figure 6b is a partial schematic view of the assembly in figure 5c, in section according to an axial centreline plane of the tyre;
- figure 7 is a partial schematic view of the assembly in figure 5c, in section according to an axial plane of the tyre, according to a possible alternative.

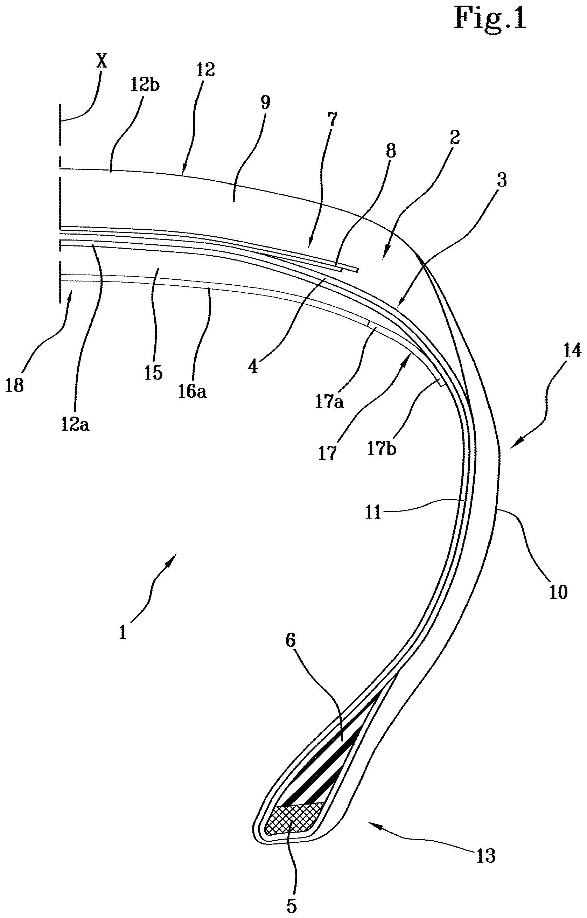

With reference to figure 1, reference numeral 1 generally indicates a self-sealing tyre obtained starting from a tyre 2 which, as will be described below, may be a green tyre or a moulded and vulcanised tyre.

According to a possible embodiment, the tyre 2 comprises a carcass structure 3 comprising at least one carcass ply 4.

The carcass ply 4 has respectively opposite end flaps engaged to respective bead cores 5. Each bead core may possibly be associated with a filler insert 6 arranged in a radially outer position with respect to the bead core.

The carcass ply 4 comprises a plurality of textile or metal reinforcement cords arranged parallel to each other and at least partially covered with a layer of elastomeric material.

The carcass structure 3 is associated with a belt structure 7 comprising one or more belt layers 8 placed in radial superposition with respect to one another and with respect to the carcass ply 4.

Said at least one belt layer 8 has reinforcing cords, typically metallic, which may have a crosswise orientation with respect to the circumferential extension direction of the tyre 2. The belt structure 7 may further comprise at least one radially outer layer also referred to as zero degrees layer which comprises cords arranged according to a substantially zero angle with respect to the circumferential extension direction of the tyre.

In radially outer position with respect to the belt structure 7, a tread band 9 made of elastomeric material is applied, like other constituent components of the tyre 2.

Respective sidewalls 10 of an elastomeric material are further applied in axially outer position on the lateral surfaces of the carcass structure 3, each extending from one of the lateral edges of the tread band 9 up to the bead cores 5.

A radially inner surface of the tyre 2 can also be internally coated with a layer of elastomeric material that is substantially impermeable to air, or so-called liner 11.

The tyre 2 may comprise further components and/or have a different configuration with respect to that illustrated in figure 1, depending on the type of vehicle and/or the conditions of use for which it is intended.

Irrespective of the components and/or the conformation, the tyre 2 comprises a crown portion 12 arranged substantially perpendicular to an axial centreline plane "X" of the tyre, in a radially outer zone of the tyre itself.

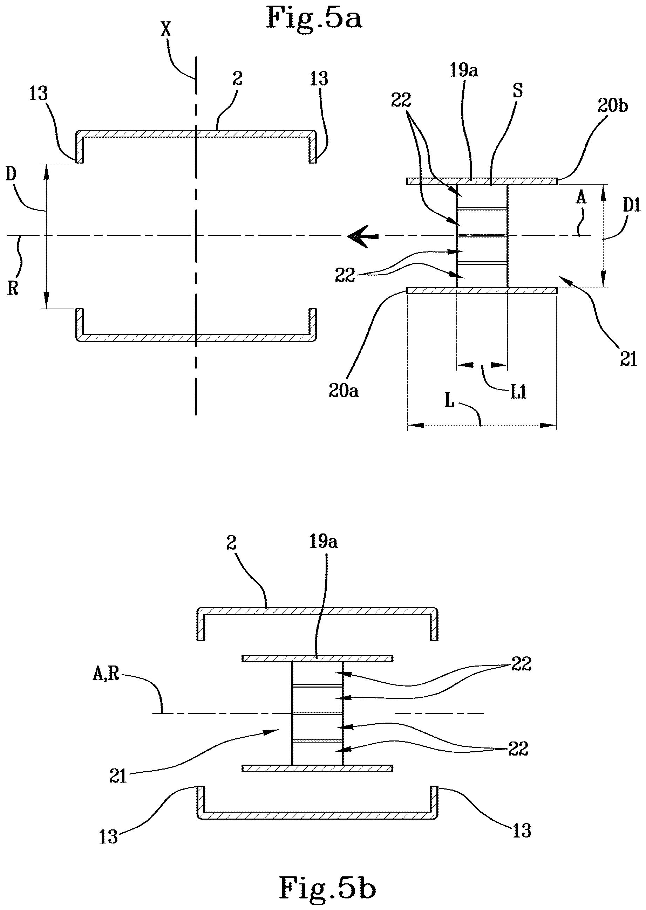

The axial centreline plane "X" of the tyre 2 is perpendicular to a rotation axis "R" of the tyre itself (figure 5a).

The crown portion 12 corresponds at least to portions of the carcass structure 3 arranged radially inner with respect to the tread band 9 of the tyre 2. Preferably, the crown portion 12 also comprises the tread band 9, and the belt structure 7 radially outer to said carcass structure 3.

For example, the crown portion 12 may extend radially between a radially inner crown surface 12a which corresponds to a radially inner surface of the tyre 2, for example of the liner 11, and a radially outer crown surface 12b which corresponds to a radially outer surface of the tyre 2 and which comprises for example the radially outer surface of the tread band 9.

The tyre 2 further comprises two annular anchoring portions 13, or beads, arranged radially inwardly and respectively on opposite sides of the axial centreline plane "X".

Each annular anchoring portion 13 corresponds to the zone of the tyre 2 configured so as to engage with its own mounting rim and it is defined by the end flap of the carcass ply 4 turned up around the bead core 5 and possibly the filler insert 6.

The tyre 2 further comprises two lateral portions 14 which extend respectively from axially opposite sides of the axial centreline plane "X" between each of the annular anchoring portions 13 and the crown portion 12. Each lateral portion 14 corresponds to a sidewall 10 and to portions of the carcass structure 3 arranged in a position axially inner to the sidewall 10. The self-sealing tyre 1, of which figure 1 illustrates a possible embodiment, further comprises a layer of self-sealing material 15 placed in direct contact with the radially inner crown surface 12a, for example with the liner 11. The layer of self-sealing material 15 extends over the entire circumferential extension of the tyre 2.

In radially inner position with respect to the layer of self-sealing material 15 and in direct contact therewith, a radially inner protective film 16a may be arranged. The radially inner protective film 16a is preferably a transparent film, for example made of thermoplastic material such as polyamide or polyester. The radially inner protective film 16a extends, like the layer of self-sealing material 15, over the entire circumferential extension of the tyre 2.

The self-sealing tyre 2 preferably comprises two lateral edges 17, for example made of elastomeric material, each arranged to laterally contain the layer of self-sealing material 15 from axially opposite sides of the axial centreline plane "X".

An axially inner portion 17a of each lateral edge 17, i.e. proximal to the axial centreline plane "X", is superimposed on the layer of self-sealing material 15 and is arranged radially therein.

An axially outer portion 17b of each lateral edge 17, that is, distal with respect to the axial centreline plane "X", lies in direct contact with the radially inner crown surface 12a, for example with the liner 11.

The layer of self-sealing material 15 preferably coupled with the two lateral edges 17 and possibly with the radially inner protective film 16a defines a self-sealing assembly 18 of the self-sealing tyre 1. The self-sealing tyre 1 therefore comprises the tyre 2 and the self-sealing assembly 18.

As a whole, the self-sealing assembly 18 extends over the entire circumferential extension of the tyre 2.

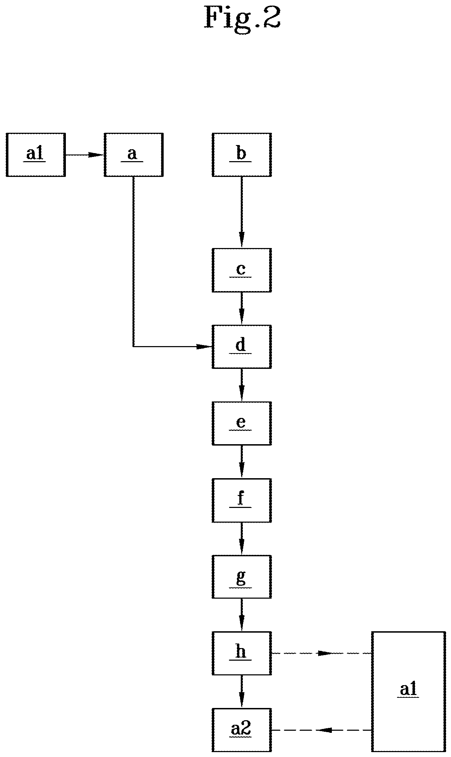

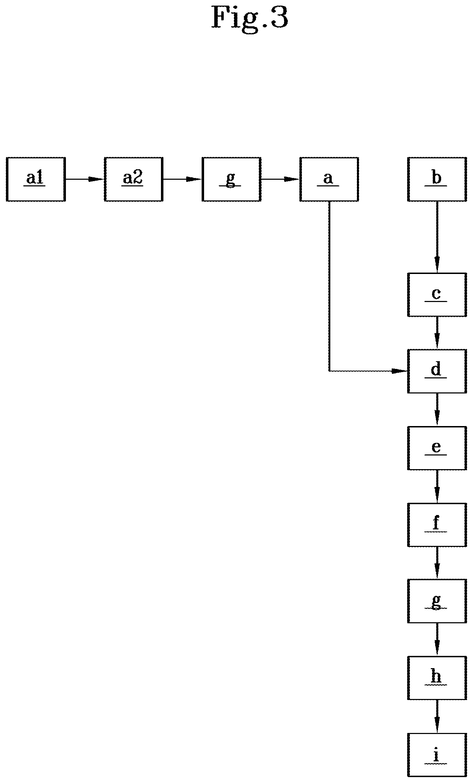

A self-sealing tyre 1, for example as described above, is obtained by a process for producing self-sealing tyres of which figure 2 and figure 3 are schematic representations of the respective flow charts and figures 5a-5f are schematic views of a related sequence of actions.

This process provides for starting from a tyre 2 suitably arranged according to an action a) of the process itself (figure 5a). In particular, it is a structurally complete tyre, i.e. comprising the crown portion 12, the two lateral portions 14 and the two annular anchoring portions 13. Each annular anchoring portion 13 has a diameter "D" (figure 5a). As an alternative, it is a green tyre being processed comprising at least one carcass structure 3 having at least one toroidally shaped carcass ply 4 having its axially opposed end flaps associated with respective bead cores 5 and forming a pair of beads or annular anchoring portions 13. Preferably, the tyre 2 is a green tyre coming from a building process a1) and not yet subjected to a moulding and vulcanisation process a2). In this case, the process for producing self-sealing tyres may be defined as "Post Building" (figure 2) since the actions directed to the formation of the self-sealing assembly 18 are carried out between the building process a1) and the process of moulding and vulcanisation a2). Alternatively, the tyre 2 may be a tyre already subjected to a process of moulding and vulcanisation, i.e. a moulded and vulcanised tyre. In this case, the process for producing self-sealing tyres may be defined as "Post Treated" (figure 3) since the actions directed to the formation of the self-sealing assembly 18 are carried out after the process of moulding and vulcanisation a2).

In both cases, the tyre 2 may come from a physically and/or temporally distant building/vulcanisation plant and/or process. Alternatively, the present process for producing self-sealing tyres may represent a sequence of final actions of a building/vulcanisation process of a tyre 2, preferably carried out in the same plant.

According to an action b) of the process for producing self-sealing tyres, it is provided to arrange a support having a substantially cylindrical configuration and having a radially outer deposition surface "S", arranged around an axis "A" at a first diameter D1 smaller than the diameter D of the annular anchoring portions 13 of the tyre 2. The support is a radially expandable support. Furthermore, the support extends along axis "A" by an axial size L1.

According to an action c) of the process for producing self-sealing tyres, it is provided to arrange a self-sealing sleeve 19 having a cylindrical configuration around the axis "A" on the deposition surface "S" of the support.

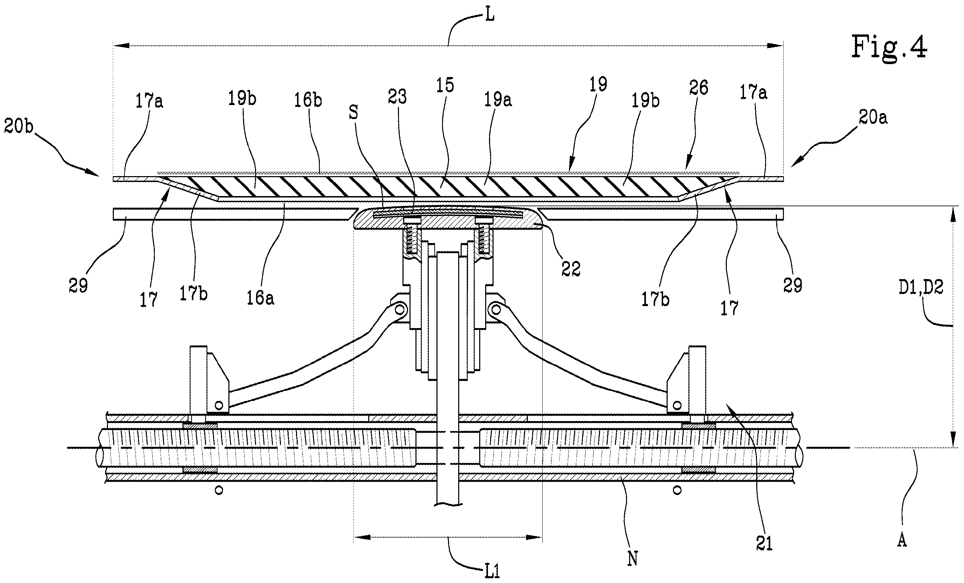

As illustrated by way of example in figures 4 and 5a, the self-sealing sleeve 19 is arranged associated with the relative support so that the axis "A" of the self-sealing sleeve 19 and of the support coincide. In other words, the self-sealing sleeve 19 is arranged on the support coaxial therewith. In detail, a radially inner surface of the self-sealing sleeve 19 is resting on the deposition surface "S" of the support.

The self-sealing sleeve 19 extends along the axis "A" between two circumferential annular end edges 20a, 20b delimiting an axial size "L" of the self-sealing sleeve 19 greater than the axial size L1 of the support. In this case, the self-sealing sleeve 19 is in contact with the deposition surface "S" at a first annular portion 19a of the self-sealing sleeve itself. The first annular portion 19a has an axial size L1 along the axis "A" equal to the axial size L1 of the support.

For example, the support is made by a drum 21 comprising radially expandable sectors 22 having axial size L1. Preferably, the drum 21 comprises a central core "N" defining the axis "A" of the drum itself. The sectors 22 are distributed around the axis "A" and are radially movable with respect to the central core. Each sector 22 has a circumferential size smaller than a circumferential size of the drum 21.

According to the illustrated example, each sector 22 comprises a laminar extension 23 extending along the circumferential direction. The laminar extensions 23 are slidably inserted with a terminal portion thereof 24 through a guide seat 25 carried by one of the circumferentially contiguous sectors 22 in radially inner position with respect to surface "S".

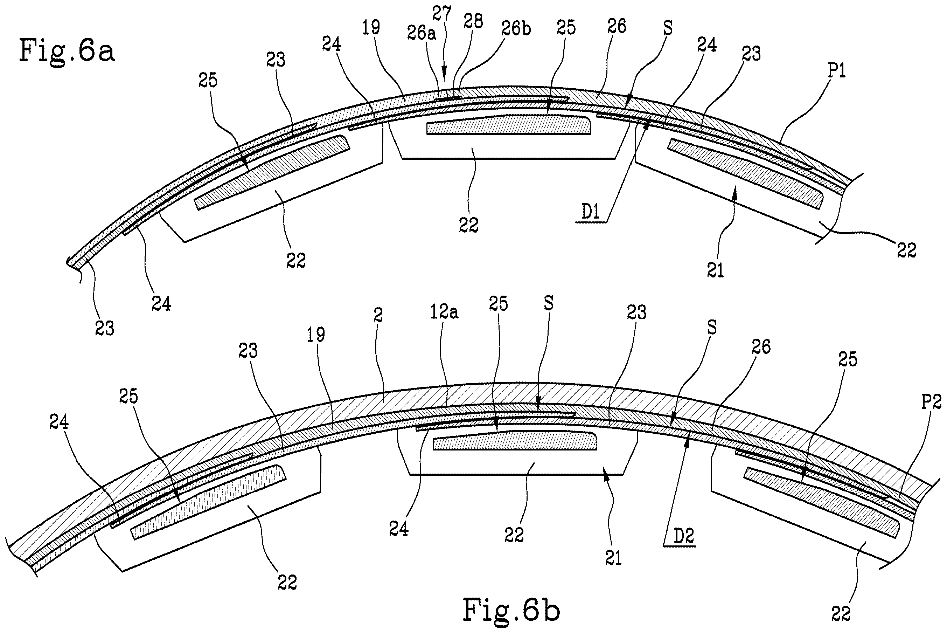

Reference is made hereinafter to drum 21 comprising radially expandable sectors 22 and with laminar extensions 23 without thereby losing generality with reference to the support. As illustrated for example in figures 4 and 6a, in order to arrange the self-sealing sleeve 19 it is possible to circumferentially deposit on the drum 21 a pre-assembled semi-finished product 26 of the self-sealing sleeve itself.

The pre-assembled semi-finished product 26 is made by means of a piece extending in width by a stretch equal to the axial size "L" of the self-sealing sleeve 19.

The pre-assembled semi-finished product 26 extends in length between opposite terminal flaps 26a, 26b by a length such as to allow the circumferential wrapping thereof around the drum 21 up to approaching or possibly overlapping the terminal flaps. The overlapping or approaching of the terminal flaps 26a, 26b generates a joint 27 which extends between the circumferential end edges 20a, 20b of the self-sealing sleeve 19, preferably parallel to the axis "A" of the self-sealing sleeve itself. Preferably, the terminal flaps 26a and 26b have an angled profile which increases the adhesion surface between the two flaps themselves.

In order to keep the terminal flaps 26a, 26b of the pre-assembled semi-finished product 26 mutually joined, it is possible to provide a stretch of adhesive tape 28 at the joint 27 and optionally to roll or press the joint itself.

For this purpose, according to the action b), two abutment elements 29 are positioned in positions axially adjacent to the drum 21 so as to axially extend the deposition surface "S" towards the exterior of the drum at least at the circumferential zone of the drum 21 in which the joint 27 will be made.

In arranging the self-sealing sleeve 19, as illustrated for example in the accompanying figures, the circumferential end edges 20a, 20b of the self-sealing sleeve 19 are positioned in positions axially outside the deposition surface "S". In this case, the first annular portion 19a is arranged along the axis "A" of the self-sealing sleeve 19 in an intermediate, preferably central, position between the circumferential end edges 20a, 20b of the self-sealing sleeve 19.

The pre-assembled semi-finished product 26 comprises at least the layer of self-sealing material 15, preferably coupled with the two lateral edges 17 and possibly with the radially inner protective film 16a. These components may also be found in the self-sealing assembly 18 of the finished self-sealing tyre 1. Furthermore, a radially outer protective layer 16b may be provided which will be removed from the pre-assembled semi-finished product 26 in order to obtain the self-sealing assembly 18. The radially outer protective layer 16b is preferably made of a film, for example of polyester coated with an anti-adhesive material such as silicone which lies in contact with the layer of self-sealing material 15, adapted to protect the same layer of self-sealing material 15 particularly when wrapped in reels.

The pre-assembled semi-finished product 26 may be taken from a reel and suitably cut to size. In this case, the presence of the radially inner protective film 16a and possibly of the radially outer protective layer 16b allows the detachment and unwinding of the reel by subdividing the turns and avoiding mutual adhesion.

The use of a pre-assembled semi-finished product 26, in particular as described above, is particularly suitable in a "Post Building" process but may also be applied to the "Post Treated" process.

Figure 4 shows a self-sealing sleeve 19 arranged on a relative drum 21, irrespective of how it was made.

The action c) provides that the self-sealing sleeve 19 is arranged in a first configuration in which it has a first inner diameter D1, corresponding to the first diameter D1 of the drum 21, smaller than the diameter "D" of the annular anchoring portions 13 of the tyre 2, as illustrated for example in figure 5a or 6a. Preferably, the sectors 22 of the drum 21 are arranged in a configuration of minimum diameter to minimise, preferably cancel, the space interposed circumferentially between one sector and the adjacent one.

Furthermore, in the first configuration the self-sealing sleeve 19 has a first circumferential perimeter "P1" (figure 6a).

The tyre 2 and the self-sealing sleeve 19, associated with the drum 21, are moved in a relative manner to introduce the self-sealing sleeve 19 within the tyre 2. The relative movement between the self-sealing sleeve/drum and tyre is carried out, according to an action d) of the process for producing self-sealing tyres, up to arranging the self-sealing sleeve 19 coaxially with the crown portion 12 and radially therein (figures 5a-5b and 6a).

Preferably, the relative movement of the tyre 2 and of the drum 21 is carried out by means of a handling device, even more preferably by means of an anthropomorphic robotic arm with at least six movement axes which grips the drum 21 at an axial end.

According to an action e) of the process for producing self-sealing tyres, the drum 21 is radially expanded within the tyre 2 up to a diameter D2. This causes the expansion of the self-sealing sleeve 19, also due to the extensibility of the material with which the radially inner protective film 16a is made, which continues until the self-sealing sleeve 19 reaches an intermediate configuration in which the self-sealing sleeve itself partially adheres to the radially inner crown surface 12a.

This action e) is executed at the first annular portion 19a of the self-sealing sleeve 19 in contact with the deposition surface "S". Following such a radial expansion, the first annular portion 19a of the self-sealing sleeve 19 has a second inner diameter D2 greater than the first inner diameter D1 and a second circumferential perimeter P2 greater than the first circumferential perimeter P1 (figure 6b).

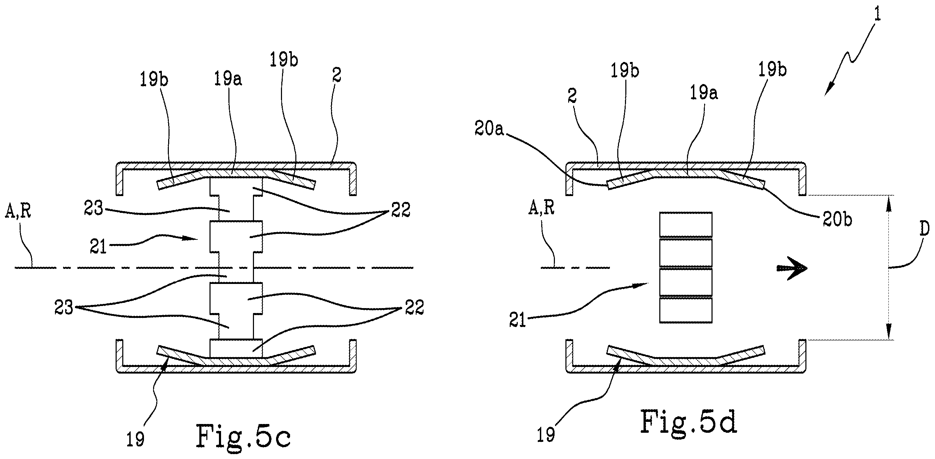

The radial expansion of the first annular portion 19a is caused by the radial expansion of the drum 21, in particular of the sectors 22, within the self-sealing sleeve itself (figures 6b and 5c).

Using a drum 21 with sectors 22 provided with laminar extensions 23, in action e) the drum 21 exerts on the self-sealing sleeve 19 a radial thrust action that is uniformly distributed according to the entire circumferential extension of the first annular portion 19a of the self-sealing sleeve 19. With reference to the example shown in figure 6b, the action e) comprises radially translating the sectors 22 according to a centrifugal direction and slidably extracting the laminar extensions 23 from the respective guide seats 25 in order to maintain the deposition surface "S" according to a substantially continuous extension.

With reference to the illustrated examples, at the end of the action e) executed at the first annular portion 19a, the self-sealing sleeve 19 adheres to the radially inner crown surface 12a at the first annular portion 19a arranged along the axis "A" in an intermediate position between the circumferential end edges 20a, 20b (figure 5d). Moreover, the self-sealing sleeve 19 falls towards the axis "A" at the two annular flaps 19b which define a second annular portion of the self-sealing sleeve complementary to the first annular portion 19a.

In other words, the second annular portion of the self-sealing sleeve 19 is given by the set of the two annular flaps 19b defining two annular end portions, each of which ends at a circumferential end edge 20a, 20b of the self-sealing sleeve 19. At the end of the action e) it is provided to radially contract the drum 21 according to an action f) of the process for producing self-sealing tyres (figure 5d). The radial contraction continues until it reaches a diameter smaller than the diameter "D" of the annular anchoring portions 13 of the tyre 2. The aforementioned action f) also provides for extracting the drum 21 from the tyre 2 by releasing the self-sealing sleeve 19 partially adhering to the radially inner crown surface 12a at the first annular portion 19a. Subsequently, according to an action g) of the process for producing self-sealing tyres, it is provided to introduce a rolling device 30 within the tyre 2 having the self-sealing sleeve 19. Preferably, the tyre 2 and the rolling device 30 are moved in a relative manner to introduce the rolling device 30 within the tyre 2 and the self-sealing sleeve 19. Preferably, the relative movement of the tyre/self-sealing sleeve and of the rolling device 30 is carried out by means of a handling device, even more preferably by means of an anthropomorphic robotic arm with at least six movement axes which grips the rolling device 30 at an axial end. Two different robotic arms may be provided, dedicated to the drum 21 and to the rolling device 30, respectively, or a single robotic arm selectively active on both. The rolling device 30 comprises a plurality of rollers 31, preferably three rollers 31 uniformly distributed circumferentially about an axis "Y" of the rolling device 30. The rolling device 30 is introduced within the tyre 2 and the self-sealing sleeve 19 partially adhering to the tyre 2 until it reaches a coaxial position with respect to the self-sealing sleeve 19.

The rolling device 30 is configured to assume at least one contracted configuration in which the radial size of the rolling device is smaller than the diameter "D" of the annular anchoring portions 13 of the tyre 2.

The rolling device 30 is further configured to assume at least one expanded configuration in which the rollers 31 are capable of exerting a radial thrust action on the self-sealing sleeve in a centrifugal direction.

According to the action g), the rolling device 30 is introduced within the tyre 2 in a contracted configuration.

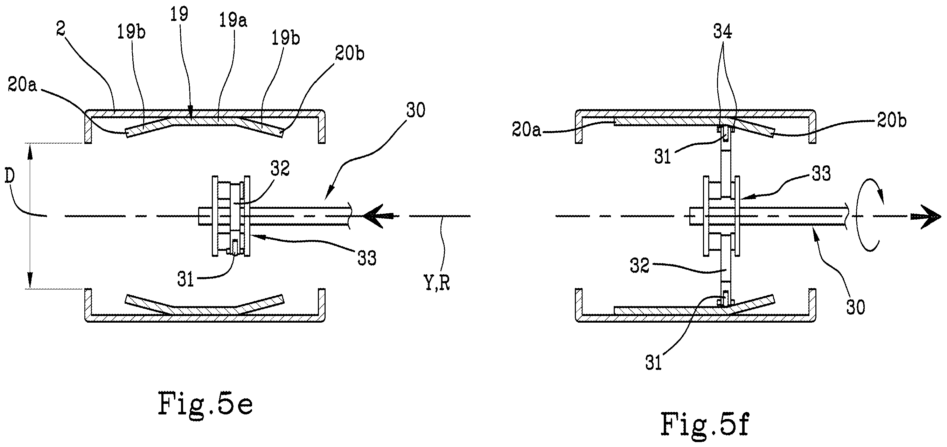

Preferably, each roller 31 is carried by an arm 32 pivoted to a central hub 33 and rotating relative thereto between a radially gathered position corresponding to the contracted configuration of the rolling device 30 (figure 5e) and a radially extended position corresponding to the expanded configuration of the rolling device 30 (figure 5f).

Preferably, each thrust action exerted by a roller 31 is independent of the thrust action exerted by another roller 31. For example, each thrust action is exerted pneumatically by means of a pneumatic actuator operating on the respective arm. Each roller 31 has, on each axially opposite side, an accompanying roller 34 adapted to exert an axial thrust on each annular flap 19b to accompany it towards the crown surface 12a immediately before rolling.

According to an action h) of the process for producing tyres, a rolling action is executed on the self-sealing sleeve 19 up to reaching a final configuration in which the self-sealing sleeve 19 fully adheres to the radially inner crown surface 12a. In order to execute the rolling action, the rolling device 30 is radially expanded within the tyre 2 up to reaching an expanded configuration in which it exerts a radial thrust action on the self-sealing sleeve in a centrifugal direction by the respective rollers 31. For radially expanding the rolling device 30 it is, for example, provided to rotate, with respect to the central hub 33, the arms 32 which carry the rollers 31 (figure 5f).

Each thrust action is exerted pneumatically and is independent of the other to adapt to the shapes and possible imperfections of the inner profile of the tyre.

In the rolling action, at least the second annular portion of the self-sealing sleeve is rotated according to an axial progression starting from the first annular portion 19a and axially moving away from it up to reaching one of the circumferential end edges 20a, 20b of the self-sealing sleeve 19.

The rolling action may begin where the first annular portion 19a ends or preferably within the first annular portion itself and continues up to reaching one of the circumferential end edges 20a, 20b of the self-sealing sleeve 19.

In order to execute the rolling action it is provided to execute a relative rotational-translational motion between the rolling device 30, in particular the rollers 31, and the self-sealing sleeve 19. Preferably, the relative movement between the self-sealing sleeve 19 and the rolling device 30 is carried out by means of the handling device, even more preferably the anthropomorphic robotic arm with at least six movement axes which grips the rolling device 30 at an axial end.

With reference to the illustrated examples, in which at the end of the action e) the self-sealing sleeve 19 adheres to the radially inner crown surface 12a at the first annular portion 19a arranged along the axis "A" in an intermediate position between the circumferential end edges 20a, 20b, the rolling action comprises a first rolling sub-action and a second rolling sub-action.

The first rolling sub-action is executed according to an axial progression starting from the first annular portion 19a and axially moving away therefrom towards a circumferential end edge 20a of the circumferential end edges 20a, 20b of the self-sealing sleeve 19. At the end of the first sub-action, an annular flap 19b adheres to the radially inner crown surface 12a (figure 5f).

The second rolling sub-action is executed according to an axial progression starting from the first annular portion 19a and axially moving away therefrom towards the other circumferential end edge 20b of the circumferential end edges 20a, 20b of the self-sealing sleeve 19. At the end of the second sub-action, the other annular flap 19b adheres to the radially inner crown surface 12a. In figure 5f, such a second rolling sub-action is being executed, after the first rolling sub-action.

The first rolling sub-action and the second rolling sub-action may in fact be carried out consecutively or simultaneously (for example by means of two rolling devices 30 or a device comprising rollers specularly arranged with respect to a plane perpendicular to the axis "Y" of the rolling device).

Immediately before rolling, it is provided to accompany each annular flap 19b towards the radially inner crown surface 12a, for example by means of the accompanying roller 33.

At the end of the rolling action, the rolling device 30 is made to contract radially and extracted from the tyre 2, leaving the self-sealing sleeve 19 completely adherent to the radially inner crown surface 12a.

At the end of the rolling action, the entire self-sealing sleeve 19 which has reached the final configuration has the second circumferential perimeter P2 greater than the first circumferential perimeter P1 and the second inner diameter D2 greater than the first inner diameter D1.

In the event that the action a) provides for arranging a green tyre, as illustrated for example in figure 2, the green tyre 2 comprising the self-sealing sleeve 19 adhering to the radially inner crown surface 12a is subjected to a vulcanisation and moulding process a2) possibly preceded by a preliminary treatment adapted to preserve the vulcanisation chamber and facilitate the extraction therefrom of the vulcanised tyre, i.e. the self-sealing tyre 1 comprising the self-sealing assembly 18. The radially inner film 16a contributes to preserving the vulcanisation chamber and facilitate the extraction.

If the action a) provides for arranging a green tyre being processed, it is provided to end the building process a1) of the green tyre comprising the self-sealing sleeve 19 adhering to the radially inner crown surface 12a, as shown with a broken line in figure 2.

If the action a) provides for arranging a moulded and vulcanised tyre, as illustrated for example in figure 3, the moulded and vulcanised tyre comprising the self-sealing sleeve 19 adhering to the radially inner crown surface 12a is subjected to further heat process i) adapted to consolidate the adhesion between the self-sealing sleeve 19 and the radially inner crown surface 12a. Furthermore, before executing the action e), a preliminary action may be provided in which it is provided to check the cleaning state of the radially inner crown surface 12a and/or to clean the radially inner crown surface 12a.

According to an alternative not shown relating to the arrangement of the self-sealing sleeve 19, the action c) comprises circumferentially depositing single components of the self-sealing sleeve 19 on the support.

According to an alternative not illustrated relating to the arrangement of the self-sealing sleeve 19, a circumferential end edge 20a of the circumferential end edges 20a, 20b of the self-sealing sleeve 19 is positioned on the deposition surface S of the drum 21, in this case the first annular portion 19a comprises such a circumferential end edge 20a.

At the end of the action e) executed at the first annular portion 19a, the self-sealing sleeve 19 adheres to the radially inner crown surface 12a at the first annular portion 19a comprising the circumferential end edge 20a and falls towards the axis "A" "at the annular flap defining the second annular portion of the self-sealing sleeve complementary to the first annular portion 19a. The subsequent rolling action is executed according to an axial progression starting from the first annular portion 19a up to reaching the other circumferential end edge 20b, making the annular flap adhere. Optionally, it may be provided to accompany the annular flap towards the radially inner crown surface 12a immediately before the rolling, as provided in the example described above.

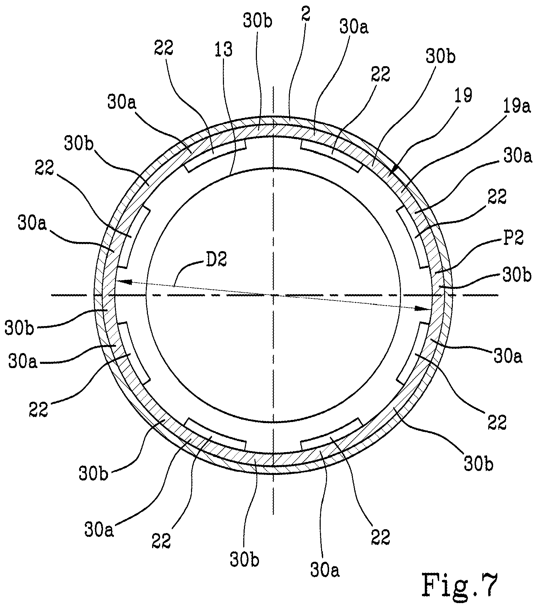

According to a possible alternative relating to the action b), for example shown in figure 7, a drum may be provided as support, comprising a plurality of sectors 22 not provided with the laminar extensions. In this case, in the action e) the support exerts on the self-sealing sleeve 19 a centrifugal radial thrust action discreetly distributed along the circumferential extension of the first annular portion 19a of the self-sealing sleeve itself. In other words, the centrifugal radial thrust is exerted at the circumferential sectors 22.

Optionally, it is possible to execute a first radial expansion of the circumferential sectors 22, exerting a first thrust action from within the first annular portion 19a at a plurality of first circumferential sectors 30a of the first annular portion itself. Each first circumferential sector 30a of the first annular portion 19a corresponds to a sector 22 of the drum 21 and therefore has a smaller circumferential size than the first circumferential perimeter P1 of the self-sealing sleeve 19. The first circumferential sectors 30a of the first annular portion 19a are circumferentially alternated with second circumferential sectors 30b of the first annular portion 19a on which the circumferential sectors 22 of the drum 21 do not operate during the first radial expansion.

A subsequent radial contraction of the circumferential sectors 22 interrupts the first thrust action on the first circumferential sectors 30a and allows the first annular portion 19a at least partially adhering to the radially inner crown surface 12a at the first circumferential sectors 30a to be released.

To promote the perfect adhesion between the self-sealing sleeve 19 and the tyre 2, it is possible to immediately execute the rolling action extended to the entire first annular portion 19a. In addition or alternatively it is possible to execute, before the rolling action, a second radial expansion of the circumferential sectors 22 after having executed a relative rotation between the contracted drum 21 and the first annular portion 19a, partially adhering to the radially inner crown surface 12a, so as to modify the angular position of the circumferential sectors 22 of the drum 21 with respect to the first circumferential sectors 30a. Preferably, said relative rotation is carried out so as to bring circumferential sectors 22 at the second circumferential sectors 30b of the first annular portion 19a circumferentially alternating to the first circumferential sectors 30a.

By executing the subsequent radial expansion of the circumferential sectors 22, a second thrust action is exerted from within the first annular portion 19a at the second circumferential sectors 30b of the first annular portion itself.

Depending on the circumferential size of the circumferential sectors 22 and of the first annular portion 19a it is possible to repeat the relative rotation between the drum 21 and the first annular portion 19a and the subsequent radial expansion of the circumferential sectors 22 up to reaching the complete adhesion of the first annular portion 19a.

## Claims

1. Process for producing self-sealing tyres, comprising:
a) arranging a tyre (2) comprising a crown portion (12) arranged circumferentially around a rotation axis (R) of the tyre (2) and two lateral portions (14) which respectively extend on axially opposite sides of the crown portion (12), wherein each lateral portion (14) terminates in an annular anchoring portion (13) having a diameter (D) and wherein the crown portion (12) has a radially inner crown surface (12a),
b) arranging a support having cylindrical configuration and exhibiting a radially outer deposition surface (S), arranged around an axis (A) at a diameter (D1) smaller than the diameter (D) of the annular anchoring portions (13) of the tyre (2), said support being radially expandable,
c) arranging, on the deposition surface (S) of the support, a self-sealing sleeve (19) having cylindrical configuration around said axis (A), said self-sealing sleeve (19) extending along said axis (A) between two circumferential end edges (20a, 20b) delimiting an axial size (L) of said self-sealing sleeve (19),
d) introducing the support carrying the self-sealing sleeve (19) within the tyre (2) until it is arranged in a position coaxial with the crown portion (12) and radially internal with respect thereto,
e) radially expanding said support within the tyre (2) up to reaching an intermediate configuration of the self-sealing sleeve (19) in which the self-sealing sleeve (19) partially adheres to the radially inner crown surface (12a),
f) radially contracting said support to a diameter smaller than the diameter (D) of the annular anchoring portions (13) of the tyre (2) and extracting said support from the tyre (2), releasing the self-sealing sleeve (19) partially adhering to the radially inner crown surface (12a),
g) introducing a rolling device (30) within the tyre (2),
h) executing a rolling action on the self-sealing sleeve (19) up to reaching a final configuration of the self-sealing sleeve (19) in which it completely adheres to the radially inner crown surface (12a).

2. Process for producing self-sealing tyres as claimed in claim 1, wherein said support extends along said axis (A) for an axial size (L1) smaller than the axial size (L) of said self-sealing sleeve (19).

3. Process for producing self-sealing tyres as claimed in claim 2, wherein the action e) is executed at a first annular portion (19a) of the self-sealing sleeve (19) in contact with the deposition surface (S), said first annular portion (19a) having axial size (L1) along said axis (A) equal to the axial size (L1) of said support.

4. Process for producing self-sealing tyres as claimed in claim 3, wherein said rolling action comprises rolling at least one second annular portion of the self-sealing sleeve (19) complementary to said first annular portion (19a), according to an axial progression starting from the first annular portion (19a) and moving axially away therefrom up to reaching a circumferential end edge of said circumferential end edges (20a, 20b) of the self-sealing sleeve (19).

5. Process for producing self-sealing tyres as claimed in claim 4, wherein said rolling action starts within the first annular portion (19a) and continues up to reaching a circumferential end edge of said circumferential end edges (20a, 20b) of the self-sealing sleeve (19).

6. Process for producing self-sealing tyres as claimed in claim 4 or 5, wherein the action c) is executed by positioning a circumferential end edge (20a) of said circumferential end edges (20a, 20b) of the self-sealing sleeve (19) on the deposition surface (S) and wherein, at the end of the action e) executed at the first annular portion (19a), the self-sealing sleeve (19) adheres to the radially inner crown surface (12a) at the first annular portion (19a) starting from said circumferential edge (20a), and falls towards said axis (A) at an annular flap defining said second annular portion of the self-sealing sleeve (19) and comprising the other circumferential end edge (20b) of said circumferential end edges (20a, 20b) of the self-sealing sleeve (19).

7. Process for producing self-sealing tyres as claimed in claim 6, wherein said rolling action is executed according to an axial progression starting from the first annular portion (19a) up to reaching the other circumferential end edge (20b) of said circumferential end edges (20a, 20b) of the self-sealing sleeve (19), making said annular flap adhere.

8. Process for producing self-sealing tyres as claimed in claim 4 or 5, wherein the action c) is executed by positioning said circumferential end edges (20a, 20b) of the self-sealing sleeve (19) in axially outer positions with respect to said deposition surface (S) and wherein, at the end of the action e) executed at the first annular portion (19a), the self-sealing sleeve (19) adheres to the radially inner crown surface (12a) at the first annular portion (19a) arranged along the axis (A) of the self-sealing sleeve (19) in an intermediate position, between said circumferential end edges (20a, 20b) of the self-sealing sleeve, and falls towards said axis (A) at two axially opposite annular flaps (19b) defining said second annular portion of the self-sealing sleeve (19) and each comprising a circumferential end edge of said circumferential end edges (20a, 20b) of the self-sealing sleeve (19).

9. Process for producing self-sealing tyres as claimed in claim 8, wherein said rolling action comprises a first rolling sub-action executed according to an axial progression starting from said first annular portion (19a) and moving axially away therefrom towards one circumferential end edge (20a) of said circumferential end edges (20a, 20b) of the self-sealing sleeve (19), making an annular flap (19b) adhere, and a second rolling sub-action executed according to an axial progression starting from said first annular portion (19a) and moving axially away therefrom towards the other circumferential end edge (20b) of said circumferential end edges (20a, 20b) of the self-sealing sleeve (19), making the other annular flap (19b) adhere.

10. Process for producing self-sealing tyres as claimed in one or more of the preceding claims, wherein in the action g), the rolling device (30) is introduced in a contracted configuration and wherein the action h) comprises radially expanding said rolling device (30) up to reaching an expanded configuration and exerting a radial thrust action on the self-sealing sleeve (19) in centrifugal direction by means of at least one roller (31).

11. Process as claimed in one or more of the preceding claims, wherein in the action e), the support exerts, on the self-sealing sleeve (19), a centrifugal radial thrust action that is uniformly distributed according to the entire circumferential extension of at least one first annular portion (19a) of the self-sealing sleeve itself.

12. Process for producing self-sealing tyres as claimed in claim 3, wherein the action c) comprises circumferentially depositing, on the support, a pre-assembled semi-finished product (26) of the self-sealing sleeve (19) having length suitable for making said self-sealing sleeve (19) and width equal to the axial size (L) of said self-sealing sleeve (19).

13. Process for producing self-sealing tyres as claimed in claim 12, wherein the action c) comprises superimposing or fitting together opposite terminal flaps (26a, 26b) of the pre-assembled semi-finished product (26) and generating a joint (27) that extends between the circumferential end edges (20a, 20b) of the self-sealing sleeve (19).

14. Process for producing self-sealing tyres as claimed in claim 13, wherein the action b) comprises positioning two abutment elements (29) in positions axially adjacent to the support so as to axially extend the deposition surface (S) towards the exterior of the support, at least at the circumferential zone of the support in which said joint (27) will be carried out.

15. Process for producing self-sealing tyres as claimed in one or more of the preceding claims, wherein in the action c) the self-sealing sleeve (19) has a first circumferential perimeter (P1) and, at the end of the action h), the self-sealing sleeve (19) which has reached the final configuration has a second circumferential perimeter (P2) greater than the first circumferential perimeter (P1).

## Patentansprüche

1. Verfahren zur Herstellung von selbstdichtenden Reifen, umfassend:
a) Anordnen eines Reifens (2), der einen um eine Drehachse (R) des Reifens (Z) umlaufend angeordneten Zenithabschnitt (12) und zwei seitliche Abschnitte (14) umfasst, die sich auf axial entgegengesetzten Seiten des Zenithabschnitts (12) erstrecken, wobei jeder seitliche Abschnitt (14) in einem ringförmigen Verankerungsabschnitt (13) mit einem Durchmesser (D) endet, und wobei der Zenithabschnitt (12) eine radial innere Zenithfläche (12a) aufweist,
b) Anordnen eines Trägers, der eine zylindrische Konfiguration hat und eine radial äußere Ablageoberfläche (S) aufweist, die um eine Achse (A) herum an einem Durchmesser (D1) angeordnet ist, der kleiner ist als der Durchmesser (D) der ringförmigen Verankerungsabschnitte (13) des Reifens (2), wobei der Träger radial expandierbar ist,
c) Anordnen einer selbstdichtenden Hülle (19), die eine zylindrische Konfiguration um die Achse (A) herum aufweist, an der Ablageoberfläche (S) des Trägers, wobei die selbstdichtende Hülle (19) sich entlang der Achse (A) zwischen zwei umlaufenden Endrändern (20a, 20b) erstreckt, die eine axiale Größe (L) der selbstdichtenden Hülle (19) begrenzen,
d) Einbringen des Trägers, der die selbstdichtende Hülle (19) trägt, in den Reifen (2), bis er in einer Position koaxial mit dem Zenithabschnitt (12) und radial innen in Bezug auf diesen angeordnet ist,
e) radiales Expandieren des Trägers innerhalb des Reifens (2) bis zum Erreichen einer Zwischenkonfiguration der selbstdichtenden Hülle (19), in welcher die selbstdichtende Hülle (19) zum Teil an der radial inneren Zenithfläche (12a) anhaftet,
f) radiales Kontrahieren des Trägers auf einen Durchmesser, der kleiner ist als der Durchmesser (D) der ringförmigen Verankerungsabschnitte (13) des Reifens (2) und Herausziehen des Trägers aus dem Reifen (2), wodurch die selbstdichtende Hülle (19), die zum Teil an der radial inneren Zenithfläche (12a) anhaftet, freigegeben wird,
g) Einbringen einer Rollvorrichtung (30) in den Reifen (2),
h) Ausführen eines Rollvorgangs auf der selbstdichtenden Hülle (19), bis eine Endkonfiguration der selbstdichtenden Hülle (19) erreicht ist, in welcher sie vollständig an der radial inneren Zenithfläche (12a) anhaftet.

2. Verfahren zur Herstellung von selbstdichtenden Reifen nach Anspruch 1, wobei der Träger sich entlang der Achse (A) über eine axiale Größe (L1) erstreckt, die kleiner ist als die axiale Größe (L) der selbstdichtenden Hülle (19).

3. Verfahren zur Herstellung von selbstdichtenden Reifen nach Anspruch 2, wobei der Vorgang e) an einem ersten ringförmigen Abschnitt (19a) der selbstdichtenden Hülle (19) in Kontakt mit der Ablageoberfläche (S) ausgeführt wird, wobei der erste ringförmige Abschnitt (19a) eine axiale Größe (L1) entlang der Achse (A) gleich der axialen Größe (L1) des Trägers aufweist.

4. Verfahren zur Herstellung von selbstdichtenden Reifen nach Anspruch 3, wobei der Rollvorgang das Rollen zumindest eines zweiten ringförmigen Abschnitts der selbstdichtenden Hülle (19), der zu dem ersten ringförmigen Abschnitt (19a) komplementär ist, gemäß einer axialen Progression, die von dem ersten ringförmigen Abschnitt (19a) ausgeht und sich axial davon weg bis zum Erreichen eines umlaufenden Endrandes der umlaufenden Endränder (20a, 20b) der selbstdichtenden Hülle (19) bewegt, umfasst..

5. Verfahren zur Herstellung von selbstdichtenden Reifen nach Anspruch 4, wobei der Rollvorgang innerhalb des ersten ringförmigen Abschnitts (19a) beginnt und sich bis zum Erreichen eines umlaufenden Endrandes der umlaufenden Endränder (20a, 20b) der selbstdichtenden Hülle (19) fortsetzt.

6. Verfahren zur Herstellung von selbstdichtenden Reifen nach Anspruch 4 oder 5, wobei der Vorgang c) ausgeführt wird, indem ein umlaufender Endrand (20a) der umlaufenden Endränder (20a, 20b) der selbstdichtenden Hülle (19) an der Ablageoberfläche (S) positioniert wird, und wobei am Ende des Vorgangs e), der an dem ersten ringförmigen Abschnitt (19a) ausgeführt wird, die selbstdichtende Hülle (19) an der radial inneren Zenithfläche (12a) an dem ersten ringförmigen Abschnitt (19a) ausgehend von dem umlaufenden Rand (20a) anhaftet, und an einer ringförmigen Klappe, die den zweiten ringförmigen Abschnitt der selbstdichtenden Hülle (19) definiert und den anderen umlaufenden Endrand (20b) der umlaufenden Endränder (20a, 20b) der selbstdichtenden Hülle (19) umfasst, zu der Achse (A) hin fällt.

7. Verfahren zur Herstellung von selbstdichtenden Reifen nach Anspruch 6, wobei der Rollvorgang gemäß einer axialen Progression ausgeführt wird, die von dem ersten ringförmigen Abschnitt (19a) ausgeht, bis zum Erreichen des anderen umlaufenden Endrands (20b) der umlaufenden Endränder (20a, 20b) der selbstdichtenden Hülle (19), was die ringförmige Klappe zum Anhaften bringt.

8. Verfahren zur Herstellung von selbstdichtenden Reifen nach Anspruch 4 oder 5, wobei der Vorgang c) ausgeführt wird, indem die umlaufenden Endränder (20a, 20b) der selbstdichtenden Hülle (19) in axial äußeren Positionen in Bezug auf die Ablageoberfläche (S) positioniert werden, und wobei am Ende des Vorgangs e), der an dem ersten ringförmigen Abschnitt (19a) ausgeführt wird, die selbstdichtende Hülle (19) an der radial inneren Zenithfläche (12a) an dem ersten ringförmigen Abschnitt (19a) anhaftet, der entlang der Achse (A) der selbstdichtenden Hülle (19) in einer Zwischenposition zwischen den umlaufenden Endrändern (20a, 20b) der selbstdichtenden Hülle angeordnet ist, und an zwei axial entgegengesetzten ringförmigen Klappen (19b), die den zweiten ringförmigen Abschnitt der selbstdichtenden Hülle (19) definieren und jeweils einen umlaufenden Endrand der umlaufenden Endränder (20a, 20b) der selbstdichtenden Hülle (19) umfassen, zu der Achse (A) hin fällt.

9. Verfahren zur Herstellung von selbstdichtenden Reifen nach Anspruch 8, wobei der Rollvorgang einen ersten Teil-Rollvorgang, der gemäß einer axialen Progression ausgehend von dem ersten ringförmigen Abschnitt (19a) und sich axial davon weg zu einem umlaufenden Endrand (20a) der umlaufenden Endränder (20a, 20b) der selbstdichtenden Hülle (19) hin bewegend, was eine ringförmigen Klappe (19b) zum Anhaften bringt, , und einen zweiten Teil-Rollvorgang umfasst, der gemäß einer axialen Progression ausgehend von dem ersten ringförmigen Abschnitt (19a) und sich axial davon weg zu dem anderen umlaufenden Endrand (20b) der umlaufenden Endränder (20a, 20b) der selbstdichtenden Hülle (19) hin bewegend ausgeführt wird, was die andere ringförmige Klappe (19b) zum Anhaften bringt.

10. Verfahren zur Herstellung von selbstdichtenden Reifen nach einem oder mehreren der vorhergehenden Ansprüche, wobei in dem Vorgang g) die Rollvorrichtung (30) in einer kontrahierten Konfiguration eingebracht wird und wobei der Vorgang h) das radiale Expandieren der Rollvorrichtung (30) bis zum Erreichen einer expandierten Konfiguration und das Ausüben einer radialen Schubwirkung auf die selbstdichtende Hülle (19) in zentrifugaler Richtung mittels zumindest einer Rolle (31) umfasst.

11. Verfahren nach einem oder mehreren der vorhergehenden Ansprüche, wobei in dem Vorgang e) der Träger auf die selbstdichtende Hülle (19) eine zentrifugale radiale Schubwirkung ausübt, die gleichmäßig gemäß der gesamten Umfangserstreckung zumindest eines ersten ringförmigen Abschnitts (19a) der selbstdichtenden Hülle selbst verteilt wird.

12. Verfahren zur Herstellung von selbstdichtenden Reifen nach Anspruch 3, wobei der Vorgang c) das Ablegen in Umfangsrichtung eines vorab assemblierten halbfertigen Produkts (26) der selbstdichtenden Hülle (19) umfasst, das eine Länge aufweist, die zur Fertigung der selbstdichtenden Hülle (19) geeignet ist, sowie eine Breite gleich der axialen Größe (L) der selbstdichtenden Hülle (19).

13. Verfahren zur Herstellung von selbstdichtenden Reifen nach Anspruch 12, wobei der Vorgang c) das Übereinanderlegen oder Zusammensetzen entgegengesetzter Endklappen (26a, 26b) des vorab assemblierten halbfertigen Produkts (26) und das Herstellung einer Verbindung (27) umfasst, die sich zwischen den umlaufenden Endrändern (20a, 20b) der selbstdichtenden Hülle (19) erstreckt.

14. Verfahren zur Herstellung von selbstdichtenden Reifen nach Anspruch 13, wobei der Vorgang b) das Positionieren von zwei Anschlagelemente (29) in Positionen axial benachbart zu dem Träger umfasst, so dass sie die Ablageoberfläche (S) zumindest an der umlaufenden Zone des Trägers, in welcher die Verbindung (27) ausgeführt werden wird, zum Äußeren des Trägers hin erweitern.

15. Verfahren zur Herstellung von selbstdichtenden Reifen nach einem oder mehreren der vorhergehenden Ansprüche, wobei in dem Vorgang c) die selbstdichtende Hülle (19) einen ersten umlaufenden Umfang (P1) aufweist, und am Ende des Vorgangs h) die selbstdichtende Hülle (19), welche die Endkonfiguration erreicht hat, einen zweiten umlaufenden Umfang (P2) aufweist, der größer als der erste umlaufende Umfang (P1) ist.

## Revendications

1. Procédé de fabrication de pneus auto-obturants, comprenant :
a) l'agencement d'un pneu (2) comprenant une partie de sommet (12) agencée de manière circonférentielle autour d'un axe de rotation (R) du pneu (2) et deux parties latérales (14) qui s'étendent respectivement sur des côtés axialement opposés de la partie de sommet (12), dans lequel chaque partie latérale (14) se termine par une partie d'ancrage annulaire (13) ayant un diamètre (D) et dans lequel la partie de sommet (12) a une surface de sommet radialement interne (12a),
b) l'agencement d'un support ayant une configuration cylindrique et présentant une surface de dépôt radialement externe (S), agencé autour d'un axe (A) à un diamètre (D1) inférieur au diamètre (D) des parties d'ancrage annulaires (13) du pneu (2), ledit support étant radialement extensible,
c) l'agencement, sur la surface de dépôt (S) du support, d'un manchon auto-obturant (19) ayant une configuration cylindrique autour dudit axe (A), ledit manchon auto-obturant (19) s'étendant le long dudit axe (A) entre deux bords d'extrémité circonférentiels (20a, 20b) délimitant une dimension axiale (L) dudit manchon auto-obturant (19),
d) l'introduction du support portant le manchon auto-obturant (19) à l'intérieur du pneu (2) jusqu'à ce qu'il soit agencé dans une position coaxiale à la partie de sommet (12) et radialement interne par rapport à celle-ci,
e) l'extension radiale dudit support à l'intérieur du pneu (2) jusqu'à atteindre une configuration intermédiaire du manchon auto-obturant (19) dans laquelle le manchon auto-obturant (19) adhère partiellement à la surface de sommet radialement interne (12a),
f) la contraction radiale dudit support à un diamètre inférieur au diamètre (D) des parties d'ancrage annulaires (13) du pneu (2) et l'extraction dudit support du pneu (2), libérant le manchon auto-obturant (19) adhérant partiellement à la surface de sommet radialement interne (12a),
g) l'introduction d'un dispositif de roulement (30) à l'intérieur du pneu (2),
h) l'exécution d'une action de roulement sur le manchon auto-obturant (19) jusqu'à atteindre une configuration finale du manchon auto-obturant (19) dans laquelle il adhère entièrement à la surface de sommet radialement interne (12a).

2. Procédé de fabrication de pneus auto-obturants tel que revendiqué dans la revendication 1, dans lequel ledit support s'étend le long dudit axe (A) sur une dimension axiale (L1) plus petite que la dimension axiale (L) dudit manchon auto-obturant (19).

3. Procédé de fabrication de pneus auto-obturants tel que revendiqué dans la revendication 2, dans lequel l'action e) est exécutée au niveau d'une première partie annulaire (19a) du manchon auto-obturant (19) en contact avec la surface de dépôt (S), ladite première partie annulaire (19a) ayant une dimension axiale (L1) le long dudit axe (A) égale à la dimension axiale (L1) dudit support.

4. Procédé de fabrication de pneus auto-obturants tel que revendiqué dans la revendication 3, dans lequel ladite action de roulement comprend le roulement d'au moins une deuxième partie annulaire du manchon auto-obturant (19) complémentaire à ladite première partie annulaire (19a), selon une progression axiale partant de la première partie annulaire (19a) et se déplaçant axialement loin de celle-ci jusqu'à atteindre un bord d'extrémité circonférentiel desdits bords d'extrémité circonférentiels (20a, 20b) du manchon auto-obturant (19).

5. Procédé de fabrication de pneus auto-obturants tel que revendiqué dans la revendication 4, dans lequel ladite action de roulement commence à l'intérieur de la première partie annulaire (19a) et continue jusqu'à atteindre un bord d'extrémité circonférentiel desdits bords d'extrémité circonférentiels (20a, 20b) du manchon auto-obturant (19).

6. Procédé de fabrication de pneus auto-obturants tel que revendiqué dans la revendication 4 ou 5, dans lequel l'action c) est exécutée en positionnant un bord d'extrémité circonférentiel (20a) desdits bords d'extrémité circonférentiels (20a, 20b) du manchon auto-obturant (19) sur la surface de dépôt (S) et dans lequel, à la fin de l'action e) exécutée au niveau de la première partie annulaire (19a), le manchon auto-obturant (19) adhère à la surface de sommet radialement interne (12a) au niveau de la première partie annulaire (19a) partant dudit bord circonférentiel (20a), et descend vers ledit axe (A) au niveau d'un flap annulaire définissant ladite deuxième partie annulaire du manchon auto-obturant (19) et comprenant l'autre bord d'extrémité circonférentiel (20b) desdits bords d'extrémité circonférentiels (20a, 20b) du manchon auto-obturant (19).

7. Procédé de fabrication de pneus auto-obturants tel que revendiqué dans la revendication 6, dans lequel ladite action de roulement est exécutée selon une progression axiale partant de la première partie annulaire (19a) jusqu'à atteindre l'autre bord d'extrémité circonférentiel (20b) desdits bords d'extrémité circonférentiels (20a, 20b) du manchon auto-obturant (19), faisant adhérer ledit flap annulaire.

8. Procédé de fabrication de pneus auto-obturants tel que revendiqué dans la revendication 4 ou 5, dans lequel l'action c) est exécutée en positionnant lesdits bords d'extrémité circonférentiels (20a, 20b) du manchon auto-obturant (19) dans des positions axialement externes par rapport à ladite surface de dépôt (S) et dans lequel, à la fin de l'action e) exécutée au niveau de la première partie annulaire (19a), le manchon auto-obturant (19) adhère à la surface de sommet radialement interne (12a) au niveau de la première partie annulaire (19a) agencée le long de l'axe (A) du manchon auto-obturant (19) dans une position intermédiaire, entre lesdits bords d'extrémité circonférentiels (20a, 20b) du manchon auto-obturant, et descend vers ledit axe (A) au niveau de deux flaps annulaires axialement opposés (19b) définissant ladite deuxième partie annulaire du manchon auto-obturant (19) et comprenant chacun un bord d'extrémité circonférentiel desdits bords d'extrémité circonférentiels (20a, 20b) du manchon auto-obturant (19).

9. Procédé de fabrication de pneus auto-obturants tel que revendiqué dans la revendication 8, dans lequel ladite action de roulement comprend une première sous-action de roulement exécutée selon une progression axiale partant de ladite première partie annulaire (19a) et se déplaçant axialement loin de celle-ci vers un bord d'extrémité circonférentiel (20a) desdits bords d'extrémité circonférentiels (20a, 20b) du manchon auto-obturant (19), faisant adhérer un flap annulaire (19b), et une deuxième sous-action de roulement exécutée selon une progression axiale partant de ladite première partie annulaire (19a) et se déplaçant axialement loin de celle-ci vers l'autre bord d'extrémité circonférentiel (20b) desdits bords d'extrémité circonférentiels (20a, 20b) du manchon auto-obturant (19), faisant adhérer l'autre flap annulaire (19b).

10. Procédé de fabrication de pneus auto-obturants tel que revendiqué dans une ou plusieurs des revendications précédentes, dans lequel dans l'action g), le dispositif de roulement (30) est introduit dans une configuration contractée et dans lequel l'action h) comprend l'extension radiale dudit dispositif de roulement (30) jusqu'à atteindre une configuration étendue et l'application d'une action de poussée radiale sur le manchon auto-obturant (19) dans une direction centrifuge au moyen d'au moins un rouleau (31).

11. Procédé tel que revendiqué dans une ou plusieurs des revendications précédentes, dans lequel dans l'action e), le support exerce, sur le manchon auto-obturant (19), une action de poussée radiale centrifuge qui est répartie uniformément selon tout le prolongement circonférentiel d'au moins une première partie annulaire (19a) du manchon auto-obturant lui-même.

12. Procédé de fabrication de pneus auto-obturants tel que revendiqué dans la revendication 3, dans lequel l'action c) comprend le dépôt circonférentiel, sur le support, d'un produit semi-fini préassemblé (26) du manchon auto-obturant (19) ayant une longueur appropriée pour fabriquer ledit manchon auto-obturant (19) et une largeur égale à la dimension axiale (L) dudit manchon auto-obturant (19) .

13. Procédé de fabrication de pneus auto-obturants tel que revendiqué dans la revendication 12, dans lequel l'action c) comprend la superposition ou l'assemblage de flaps terminaux opposés (26a, 26b) du produit semi-fini préassemblé (26) et la génération d'un joint (27) qui s'étend entre les bords d'extrémité circonférentiels (20a, 20b) du manchon auto-obturant (19).

14. Procédé de fabrication de pneus auto-obturants tel que revendiqué dans la revendication 13, dans lequel l'action b) comprend le positionnement de deux éléments de butée (29) dans des positions axialement adjacentes au support de manière à étendre axialement la surface de dépôt (S) vers l'extérieur du support, au moins au niveau de la zone circonférentielle du support dans laquelle ledit joint (27) sera réalisé.

15. Procédé de fabrication de pneus auto-obturants tel que revendiqué dans une ou plusieurs des revendications précédentes, dans lequel dans l'action c) le manchon auto-obturant (19) a un premier périmètre circonférentiel (P1) et, à la fin de l'action h), le manchon auto-obturant (19) qui a atteint la configuration finale a un deuxième périmètre circonférentiel (P2) supérieur au premier périmètre circonférentiel (P1).
